Europäisches Patentamt

European Patent Office

Office européen des brevets

(19)

(11) **EP 0 964 832 B1**

(12) **EUROPÄISCHE PATENTSCHRIFT**

(45) Veröffentlichungstag und Bekanntmachung des Hinweises auf die Patenterteilung:
**23.05.2001 Patentblatt 2001/21**

(51) Int Cl.[7]: **C03C 3/06**, C03B 19/04, C03C 4/00

(21) Anmeldenummer: **98921387.1**

(22) Anmeldetag: **06.03.1998**

(86) Internationale Anmeldenummer:
**PCT/EP98/01311**

(87) Internationale Veröffentlichungsnummer:
**WO 98/40319 (17.09.1998 Gazette 1998/37)**

(54) **VORFORM AUS SYNTHETISCHEM KIESELGLAS UND VORRICHTUNG ZU IHRER HERSTELLUNG**

SYNTHETIC QUARTZ GLASS PREFORM AND DEVICE FOR THE PRODUCTION THEREOF

PREFORME EN VERRE DE QUARTZ SYNTHETIQUE ET DISPOSITIF DE PRODUCTION

(84) Benannte Vertragsstaaten:
**AT DE FR GB NL**

(30) Priorität: **07.03.1997 DE 19709379**

(43) Veröffentlichungstag der Anmeldung:
**22.12.1999 Patentblatt 1999/51**

(73) Patentinhaber: **Schott ML GMBH**
**07745 Jena (DE)**

(72) Erfinder:
• **CORIAND, Frank**
**D-07747 Jena (DE)**
• **MENZEL, Andreas**
**D-07745 Jena (DE)**
• **VOITSCH, Andreas**
**D-07745 Jena (DE)**

(74) Vertreter: **Bock, Gerhard, Dipl.-Ing.**
**Patentanwaltsbüro Pfeiffer & Partner**
**Winzerlaer Strasse 10**
**07745 Jena (DE)**

(56) Entgegenhaltungen:
**EP-A- 0 401 845    EP-A- 0 483 752**
**EP-A- 0 622 340    EP-A- 0 673 888**
**EP-A- 0 720 970    EP-A- 0 735 006**
**EP-A- 0 780 345    DE-A- 4 203 287**

• **PATENT ABSTRACTS OF JAPAN vol. 95, no. 8, 29.September 1995 & JP 07 138028 A (SHIN-ETSU CHEM. CO. LTD.), 30.Mai 1995,**
• **PATENT ABSTRACTS OF JAPAN vol. 12, no. 373, 6.Oktober 1988 & JP 63 123831 A (SUMITOMO ELECTRIC IND. LTD.), 27.Mai 1988,**
• **PATENT ABSTRACTS OF JAPAN vol. 14, no. 14, 12.Januar 1990 & JP 01 257146 A (JAPAN METALS & CHEM. CO. LTD.), 13.Oktober 1989,**

**Beschreibung**

Die Erfindung betrifft eine Vorform aus synthetischem Kieselglas und eine Vorrichtung zu ihrer Herstellung gemäß der Gattung der Patentansprüche.

Entsprechend der Entwicklung in der Halbleiterindustrie selbst, aber auch durch den Einsatz von Erzeugnissen der Halbleiterindustrie auf diversen Anwendungsgebieten sowie durch eigenständige Entwicklungen, insbesondere auf den Fachgebieten Materialwirtschaft und Medizin, kommen Lichtquellen mit sehr hohen Energiedichten zum Einsatz. Vornehmlich sind dies Excimerlaser mit Arbeitswellenlängen von 248 nm und 193 nm. Die dabei verwendeten optischen Bauteile zur Abbildung und Strahlenführung sowie die Fotomasken, die ausschließlich aus synthetischem Kieselglas oder Kalziumfluorid bestehen, müssen die erforderliche optische Qualität aufweisen und dürfen diese optische Qualität im Dauereinsatz nicht verlieren. Die wichtigsten und am schwierigsten einzustellenden Qualitätsmerkmale der optischen Bauteile sind die optische Homogenität und die Widerstandsfähigkeit gegen Excimerlaserstrahlung im tiefen ultravioletten Licht (DUV). Es hat daher in der Vergangenheit nicht an Versuchen gefehlt, diese Qualitätsmerkmale dauerhaft und reproduzierbar zu erreichen.

So ist aus der DE 42 04 406 A1 ein Verfahren zur Herstellung eines homogenen, schlierenfreien Körpers aus Quarzglas bekannt, bei dem ein stabförmiger Ausgangskörper verdrillt, thermisch mehrfach in einer Form aus geeignetem Fremdmaterial umgeformt und wieder verdrillt wird. In der EP 0 673 888 A1 wird dieses Verfahren durch Vermeidung jeglichen Kontaktes mit einem Fremdmaterial derart verändert, daß der danach hergestellte Quarzglaskörper in drei Richtungen optisch homogen und außerdem stabil gegenüber Excimerlaserstrahlung ist. In welchem Maße diese Stabilität erreicht wird, geht aus der EP 0 673 888 A1 nicht hervor. Auch ist das Verfahren sehr zeit- und kostenaufwendig.

Synthetisches Kieselglas zeichnet sich durch eine sehr gute Transmission im tiefen Bereich des ultravioletten Lichtes (DUV) aus. Wird es energiereicher kurzwelliger Strahlung ausgesetzt, die bspw. Excimerlaser bei 248 nm und 193 nm liefern, so kommt es zu fotochemischen Reaktionen, welche zur Ausbildung paramagnetischer Defekte führen, die für die Ausbildung von Absorptionsbanden und das Auftreten von Lumineszenzen verantwortlich sind. Die Stärke dieser fotochemischen Reaktionen ist von intrinsischen Defekten in Form von Bindungsanomalien abhängig. Ebenso verstärken Verunreinigungen im Netzwerk, die bspw. durch Atome von Übergangsmetallen und Chlor gegeben sind, die fotochemischen Reaktionen. Parallel zu diesen, die optischen Eigenschaften des Kieselglases beeinträchtigenden fotochemischen Reaktionen laufen Ausheilungsvorgänge ab, für die der OH-Gehalt und der Gehalt an freiem Wasserstoff im Kieselglas von Bedeutung ist.

Aus dem nachfolgend diskutiertem Stand der Technik ist es bekannt, synthetisches Kieselglas durch folgende einzeln oder kombiniert vorzunehmende Maßnahmen gegen hochenergiereiche Strahlung im DUV unempfindlich zu machen:

- Einbringung von molekularem Wasserstoff in kompaktes Kieselglas,
- Verwendung von besonders reinem Ausgangsrohstoff,
- Verwendung von chlorfreiem Ausgangsrohstoff,
- Dotierung des Kieselglases mit Fluor u. a.

Die EP 0 483 752 A1 (US 5 410 428) betrifft ein synthetisches Kieselglas mit einem Gehalt an molekularem Wasserstoff von mindestens $5 \cdot 10^{16}$ Molekülen $/cm^3$, das hergestellt wird, indem ein Kieselglaskörper in einem Ofen bei hoher Temperatur und hohem Druck während einer definierten Zeit solange einer Wasserstoffatmosphäre ausgesetzt wird, bis sich in seinem Inneren die gewünschte Wasserstoffkonzentration eingestellt hat; danach wird der Kieselglaskörper definiert auf die Umgebungstemperatur abgekühlt. Dieses Kieselglas wird bereits als gegen energiereiche Strahlung im DUV sehr widerstandsfähig bezeichnet, obwohl es nur $2 \cdot 10^6$

Laserschüssen ausgesetzt worden ist. Nachteilig ist die Notwendigkeit der Nachbehandlung des Kieselglases und die hierzu erforderlichen umfangreichen Sicherheitsvorkehrungen. Außerdem dürften die hergestellten Kieselglaskörper mit den gewünschten Eigenschaften nicht sehr großvolumig sein.

Die EP 0 525 984 A1 beschreibt ein Verfahren zur Herstellung von Kieselglas, das einer Excimerlaserstrahlung ausgesetzt werden kann. Allerdings ist seine Widerstandsfähigkeit nur bis zu einer Laserschußzahl von ca. $10^6$ bei einer Energiedichte von 200 $mJ/cm^2$, einer Schußfrequenz von 100 Hz und einer Wellenlänge $\lambda = 193$ nm dargestellt. Das Verfahren kommt nicht ohne einen speziellen Homogenisierungsschritt aus, der es aufwendig gestaltet.

Die EP 0 737 654 A1 betrifft ein synthetisches Kieselglas mit einem Gehalt an molekularem Wasserstoff von mindestens $10^{18}$ Molekülen/$cm^3$ und einem niedrigen OH-Gehalt von maximal 50 ppm, der bei einer Temperatur von maximal 500°C und unter hohem Druck mit $H_2$ angereichert wurde. Die Widerstandsfähigkeit wird mit $1,3 \cdot 10^7$ Laserschüssen bei einer Energiedichte von 350 $mJ/cm^2$, einer Schußfrequenz von 400 Hz und einer Wellenlänge von 248 nm angegeben. Auch in diesem Fall ist eine Nachbehandlung des Kieselglases erforderlich, zu der ein chlorfreier Rohstoff benutzt werden kann.

In der US 5 364 433 A ist ein zur Herstellung von DUV-Stepperlinsen geeignetes synthetisches Kieselglas und ein Verfahren zu seiner Herstellung offenbart. Das Kieselglas weist einen OH-Gehalt von 10 - 100 ppm, einen Chlorgehalt von max. 200 ppm, einen Gehalt an molekularem Wasserstoff von $< 10^{16}$ Moleküle/$cm^3$, eine Brechzahlhomogenität von $> 5 \cdot 10^{-6}$ und eine Spannungsdoppelbrechung von $> 5$ nm/cm auf. Die Widerstandsfähigkeit dieses Kieselglases gegen Excimerlaserstrahlung ist bei geringer Absorption nur bis zu einer geringen Schußzahl von $0,8 \cdot 10^6$ (Energiedichte 200 mJ/$cm^2$, Schußfrequenz 100Hz, $\lambda = 193$ nm) dargestellt. Die relativ geringe Widerstandsfähigkeit läßt sich daraus erklären, daß ein im Herstellungsverfahren vorgesehener Entwässerungsschritt zu einer Erhöhung des Cl-Gehaltes führt, der wiederum die DUV-Widerstandsfähigkeit herabsetzt. Ein außerdem vorgesehener Homogenisierungsschritt gestaltet das Verfahren aufwendiger.

Eine Substratplatte für Fotomasken, die einen $H_2$-Gehalt zwischen $10^{17}$ und $10^{19}$ Moleküle/$cm^3$ aufweist, enthält die EP 0 636 586 A1. Für die Herstellung abbildender optischer Bauelemente im DUV-Bereich, die wesentlich höheren Anforderungen hinsichtlich der Transmission und der optische Homogenität unterliegen als Fotomasken, ist diese Lösung wenig oder nicht geeignet.

Die US 5 086 352 A offenbart optische Bauteile aus synthetischem Kieselglas, die in DUV-Excimerlaserstrahlung verwendet werden können, und Verfahren zu ihrer Herstellung. Die optischen Bauteile weisen eine OH-Konzentration von wenigstens 100 ppm und, eine dotierte Wasserstoffkonzentration von mindestens $5 \cdot 10^{16}$ Moleküle/$cm^3$ (bzw. bei Entgasung abgegebene Menge von $1 \cdot 10^{20}$ Moleküle/$cm^3$) auf und sind frei von Schichtungen in wenigstens einer Richtung. Als chemische Reinheit des Bauteils werden im anspruchsvollsten Fall für Na, K und Li 50 ppb und für Mg, Ca, Ti, Cr, Fe, Ni und Cu 10 ppb angegeben. Die Vorformen der optischen Bauteile werden dadurch charakterisiert, daß Schichtungen parallel zum einfallenden Licht nicht vorhanden sind, daß die OH-Konzentration von einem zentralen Minimum zu einem Maximum ohne Wendepunkt ansteigt, daß im Bereich zwischen Minimum und Maximum die Brechzahlinhomogenität $2 \cdot 10^{-6}$ oder geringer ist und daß eine Wasserstoffdotierung vorliegt. Eine derartige Vorform weist Profile der OH-Konzentration, der Cl-Konzentration und der fiktiven Temperatur auf, die zur Erreichung einer hohen Brechzahlhomogenität einzustellen sind. Die Verfahren zur Herstellung der optischen Bauteile umfassen in jedem Fall die Schritte zum Entfernen von Schichtungen und zum Dotieren mit Wasserstoff, die den gesamten Herstellungsprozeß kompliziert und teuer gestalten. Darüber hinaus ist die Widerstandsfähigkeit nur bis zu einer relativ geringen Laserschußzahl von $10^7$ (Energiedichten: 400 bzw. 100 mJ/$cm^2$, Schußfrequenzen: 100 Hz, $\lambda$: 248 bzw. 193 nm) angegeben.

Die US 5 325 230 A baut auf der US 5 086 352 A auf und erhebt für das optische Bauteil aus synthetischem Kieselglas zusätzlich die Forderung nach fehlenden Sauerstoffdefekten und nach einer Spannungsdoppelbrechung, die $< 5$ nm/cm betragen soll. Die OH-Konzentrationsverteilung ist axialsymmetrisch. Auch in diesem Fall sind bei der Herstellung der optischen Bauteile Schichtungen zu entfernen und Dotierungen mit Wasserstoff vorzunehmen. Es sind erhebliche und kostspielig Anstrengungen zum Erreichen einer hohen Reinheit des Kieselglases notwendig, die auch darin zum Ausdruck kommen, daß besondere Maßnahmen zum Lagern der Ausgangsstoffe ergriffen werden müssen.

In der EP 0 747 327 A1 wird ein Verfahren zur Wärmebehandlung und Konsolidierung einer Kieselglaspreform beschrieben, wodurch eine Reduzierung der laserinduzierten Schädigung des Kieselglases erreicht werden soll. Aussagen zur Brechzahlhomogenität, zur Form und Masse der herstellbaren Körper, zur Anwendbarkeit des. hergestellten Kieselglases unter extremen Bedingungen sind nicht zu finden. Die dargestellten Absorptionserhöhungen bei 248 nm bzw. 193 nm sind nur bis zu wenigen Millionen Schuß tolerabel.

Die EP 0 622 340 A1 offenbart ein verbessertes Verfahren zur Herstellung eines Körpers aus synthetischem Kieselglas. Ein aus mindestens fünf Düsen bestehender Brenner wird derart mit Brenngas versorgt, daß das hergestellte synthetische Kieselglas einen gegenüber dem $H_2$-Gehalt optimierten OH-Gehalt aufweist. Es fehlen Aussagen zur erreichten DUV-Widerstandsfähigkeit und Brechzahlhomogenität. Zur Erzielung von OH-Gehalten oberhalb von 1150 ppm ist dieses Verfahren bezüglich des erzielbaren Aufwachsverhaltens instabil.

Im EP 0720 969 A1 sind ein Kieselglas, ein dieses Kieselglas enthaltendes optisches Bauteil und ein Herstellungsverfahren für das Kieselglas beschrieben. Zur Herstellung der Vorformen wird ein nach unten gerichteter Brenner verwendet. Die Widerstandsfähigkeit des Kieselglases gegenüber der Excimerlaserstrahlung liegt bei relativ geringen Schußzahlen von ca. $10^6$. Ein Cl-Gehalt von 10 ppm wird durch eine außerordentlich geringe, unwirtschaftliche Rohstoffzugabe von 70 g/min $\cdot cm^2$ durch die Mitteldüse des Brenners erreicht. Die OH-Konzentration des Kieselglases liegt im wesentlichen bei nur 900 ppm.

Die EP 0 720 970 A1 ist auf ein Kieselglas für Zwecke der Fotolithografie, ein dieses Kieselglas enthaltendes optisches Bauteil, ein das Bauteil enthaltendes fotolithografisches Gerät und ein Verfahren zur Herstellung des Kieselglases gerichtet Es werden Bedingungen zur Herstellung einer Vorform angegeben, die auch im DUV brauchbar ist. Allerdings ist die Widerstandsfähigkeit des Kieselglases gegen Excimerlaserstrahlung nur bis $10^6$ Schuß dargestellt. Am Kieselglas wird eine F-Dotierung vorgenommen, die bekanntlich geringe Streuungsverluste gewährleistet und eine günstige Wirkung auf die DUV-Resistenz ausübt. Allerdings dürfte sich durch die F-Dotierung keine hohe optische Homogenität des geschmolzenen Quarzglases erreichen lassen. Bei der $SiO_2$-Abscheidung an den Orten mit höchster Temperatur bildet sich dort auch die höchste OH-Konzentration und die höchste F-Konzentration heraus. Es findet also eine Fehleraddition statt, die den Gradienten des Brechzahlverlaufs vergrößert.

Schließlich ist in der EP 0 735 006 ein Verfahren zur Herstellung von Quarzglas beschrieben, bei dem der Aufwachsprozeß des künstlich hergestellten Quarzglases in vertikaler Richtung erfolgt. Die Prozeßführung erfolgt so, daß die Schichtungen immer nur senkrecht zur Aufwachsrichtung der Vorform auftreten.

Durch die Erfindung sollen Mängel der bekannten synthetischen Kieselgläser vermieden werden, die deren Einsatz für extreme Anwendungen im DUV bisher nicht gestattet haben. Der Erfindung liegt daher die Aufgabe zugrunde, unter Anwendung der Flammenhydrolyse ein synthetisches Kieselglas herzustellen, das höchsten Ansprüchen bezüglich der Widerstandsfähigkeit gegenüber Excimerlaserstrahlung im DUV bei hoher Energiedichte und bezüglich der optischen Homogenität genügt. Es ist ferner Aufgabe der Erfindung, eine für die Herstellung dieses Kieselglases besonders geeignete Vorrichtung anzugeben, die die Ausbeute des Herstellungsprozesses maximal gestaltet.

Gemäß der Erfindung wird diese Aufgabe durch die kennzeichnenden Merkmale des ersten Patentanspruchs gelöst. Es kann auch Strahlung anderer Wellenlängen verwendet werden, wenn sie nur unter 250 nm liegt. Die im ersten Patentanspruch genannten Anregungsbedingungen können verändert werden; bspw. ergibt sich für eine Laserschußfrequenz (Frequenz) $\geq$ 400 Hz, eine Laserschußzahl (Schußzahl) $\geq$ $10^8$ und eine Energiedichte $\leq$ 25mJ/cm$^2$ für die Wellenlänge $\lambda_1$ = 248 nm eine Transmissionsverringerung $\Delta$ T $\leq$ 0,05%, die aber dem Damage-Verhalten bei den im ersten Patentanspruch genannten Werten entspricht. Sie liegt daher im Rahmen der Erfindung. Generell kann gesagt werden, daß bei veränderter Bestrahlung zwar eine veränderte Verringerung der inneren Transmission jedoch ein unverändertes Damage-Verhalten auftritt. Unter dem Damage-Verhalten versteht der Fachmann eine Langzeitschädigung, z. B. eine Transmissionsveränderung, von synthetischem Quarzglas unter Einwirkung von Excimerlaserstrahlung.

Der Kernbereich der Vorform erstreckt sich über mindestens 50 bis 90% des Vorformdurchmessers, der bis zu 18 cm und mehr betragen kann. Sie weist weder eine axiale noch eine zu ihrer Aufwachsrichtung quer liegende Schichtung auf; ihr gesamtes Volumen ist schichtungsfrei. Der Aufwachsbereich der walzenförmigen Vorform hat einen zentrumsnahen, zumindest nahezu ebenen Teil, der im wesentlichen mit dem Kern übereinstimmt, und einen peripheren Teil mit parabolischer Fläche, die in eine zylindrische Mantelfläche der walzenförmigen Vorform übergeht. Der für die unterschiedlichen Zwecke nutzbare Querschnittsbereich der Vorform, in dem die Qualität des synthetischen Kieselglases den jeweiligen Anforderungen genügt, ist unterschiedlich. Bspw. genügt es für den Einsatz in Beleuchtungssystemen für Excimerlasern, daß das synthetische Kieselglas eine hohe Beständigkeit und Transmission bei hinreichende Homogenität aufweist. In dem Fall könnten 70 bis 90% des inneren Querschnitts der Vorform genutzt werden. Werden aus der Vorform Projektionselemente zur Führung energiereicher Laserstrahlung hergestellt, so ist unter gleichen Voraussetzungen eine Beschränkung auf die inneren 50 bis 70% des Querschnitts der Vorform notwendig. Dabei ist maßgeblich, daß über diesen inneren Querschnitt nicht nur eine hohe Beständigkeit und Transmission, sondern auch eine hohe Homogenität besteht; das heißt aber, daß der OH-Gehalt der Vorform über diesen inneren Querschnitt auf $\pm$ 10 ppm konstant ist. Vorteilhaft beträgt der OH-Gehalt des Kernbereichs der Vorform mindetens 1250 ppm mit einer Toleranz von $\pm$ 10 ppm. Ihr Cl-Gehalt überschreitet 20 ppm nicht und beträgt vorzugsweise 5 bis 15 ppm. Der $H_2$-Gehalt des Kernbereichs der Vorform beträgt vorteilhaft $\geq$ 1 $\cdot$ $10^{18}$ Moleküle/cm$^3$. Eine Vorform mit den vorstehend genannten Parametern ist in hohem Maße gegen energiereiche DUV-Strahlung widerstandsfähig, weist eine hohe Brechzahlkonstanz auf und eignet sich vorzüglich zur Herstellung von optischen Bauelementen wie DUV-Stepperlinsen, Laserstrahlführungselementen, Fotomasken u. a.. Zumindest über einen Teil des Kernbereichs weist die Vorform vorteilhaft eine Brechzahlhomogenität von $\leq$ 0,5 $\cdot$ $10^{-6}$ auf. Dabei können in der Vorform Spuren von Verunreinigungselementen (z. B. Cr, Co, Fe, Ni, Cu, V, Zn, Al, Li, K, Na) bis zu 500 ppb enthalten sein. Die erfindungsgemäße Vorform benötigt kein zusätzlichen Dotierungen mit $H_2$, F u. a., um sie für Aufgaben in DUV-Excimerlaserstrahlung gebrauchsfähig zu machen. Auch eine Nachbehandlung des synthetischen Kieselglases in reduzierender Atmosphäre ist nicht erforderlich. Ggf. ist es vorteilhaft, die optischen Bauelemente aus dem Material des Kernbereichs herauszuschneiden.

Eine Vorrichtung zur Herstellung der erfindungsgmäßen Vorform umfaßt eine im wesentlichen horizontale Muffel mit zwei gegenüberliegend angeordneten, unterschiedlich großen Öffnungen, von denen die größere zur Einführung der Vorform und die kleinere zur Einführung eines Brenners dient, und mit einem Innenraum, der sich von der größeren zur kleineren Öffnung verengt. Der Brenner weist koaxial zueinander und zur Brennerachse angeordnete Düsen auf, von denen die mittlere das Grundmaterial, z. B. $SiCl_4$ und $O_2$, und die äußeren das Brenngas, z. B. $H_2$ und $O_2$, parallel zueinander und zur Brennerachse ausströmen lassen. Die Verengung erfolgt im wesentlichen kontinuierlich. Die Muffel hat im Gegensatz zu ähnlichen bekannten Vorrichtungen oben weder eine Öffnung noch eine Ausbuchtung. Die Gesamtlänge der Muffel ist mindestens zweimal so groß wie der Durchmesser der glasigen Vorform. Ihre nahezu ebene Frontfläche befindet sich vorteilhaft im Zentrum des Innenraumes der Muffel. Zur Gewährleistung einer ausreichenden und konstanten Innentemperatur sowie einer geringen Abstrahlung ist die Muffel günstigerweise dreischichtig ausgebildet. Von Vorteil ist es, wenn der Abstand der im wesentlichen rotationssymmetrischen Vorformoberfläche von der Innenraumbegrenzungsfläche in Abhängigkeit von den Stömungsverhältnissen für das Abgas 5 bis 100 mm berägt. Weiterhin ist es günstig, wenn der Abstand des Brenners von der Vorform in Abhängigkeit von der Brennnerdüsengeometrie und den Brenngasvolumenströmen 135 bis 350 mm beträgt. Für die kleinere Öffnung, in der der Brenner frei beweglich angeordnet ist, ist ein Durchmesser von 50 bis 100 mm empfehlenswert.

Die erfindungsgemäße Vorrichtung gewährleistet durch die Innengeometrie der Muffel und die Fahrweise des Brenners eine definierte Uniströmung der Vorform mit Brenngas sowie die Aufschmelzung von grundsätzlich beliebig langen Vorformen. Es ist keine Nachbehandlung (Verdrillung, Dotierung) der Vorform erforderlich. Lediglich eine Veränderung der Geometrie zur Anpassung der Vorform an den vorgesehenen Verwendungszweck kann mit einer Erwärmung der Vorform verbunden sein. Mit der erfindungsgemäßen Vorrichtung ist es trotz einer extremen Prozeßführung möglich, optisch homogene und im DUV gegen energiereiche Laserstrahlen beständige Vorformmassen von 50 kg und mehr im normalen Schmelzprozeß zu erschmelzen.

Die Erfindung wird nachstehend an Hand der schematischen Zeichnung näher erläutert. Es zeigen:

Fig. 1 eine erfindungsgemäße Vorrichtung zum Aufschmelzen einer erfindungsgemäßen Vorform,

Fig. 2 ein Diagramm, bei dem die innere Transmission eines aus einer Vorform herausgetrennten Kieselglasblocks in Abhängigkeit von der Laserpulszahl für eine Wellenlänge $\lambda_1$ = 248 mn aufgetragen ist,

Fig. 3 ein der Fig. 2 entsprechendes Diagramm für $\lambda_2$ = 193 nm,

Fig. 4 eine Draufsicht auf eine erfindungsgemäße Vorform und

Fig. 5 vier Diagramme a, b, c, d, die sich für die laserinduzierte Fluoreszenz (LIF) bei Durchstrahlung mit Laserlicht der Wellenlängen $\lambda_1$ = 248 nm und $\lambda_2$ = 193 nm, den OH-Gehalt und die Spannungsdoppelbrechung ergeben.

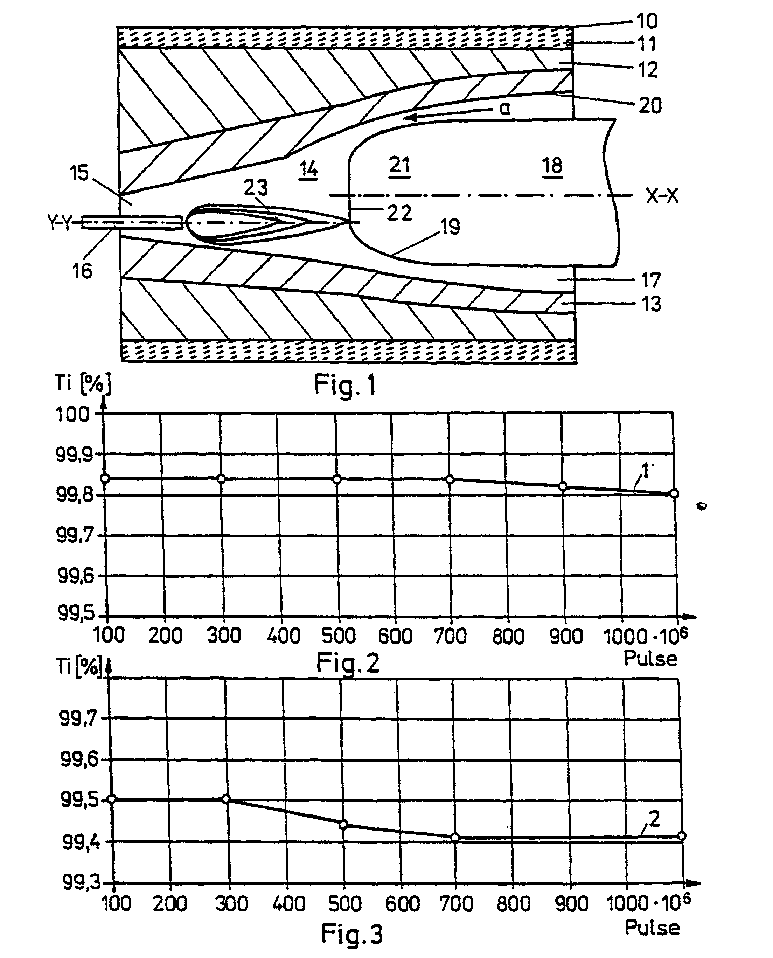

In Fig. 1 ist eine, einen geringen Wärmeverlust durch Abstrahlung bewirkende, horizontal angeordnete Muffel 10 mit drei Schalen 11, 12, 13 dargestellt, von denen die Schale 11 aus einem Isolierstoff hoher Porosität, z. B. Keramikfasermaterial, die Schale 12 aus Feuerbeton oder Schamotte und die Schale 13 aus einem hochtemperaturbeständigen Material, bspw. $Al_2O_3$ oder SiC, besteht. Die Muffel 10 besitzt einen Innenraum 14 mit einerseits einer kleineren Öffnung 15 zur Einführung eines Brenners 16 und andererseits größeren Öffnung 17, durch die eine aufzuschmelzende Vorform 18, deren geometrische Achse mit ihrer Drehachse X-X identisch ist, in die Muffel 10 hineinragt. Zur Achse X-X ist auch zumindest der die Vorform 18 umschließende Teil der Muffel 10 zumindest angenähert rotationssymmetrisch. Zwischen einer parabolischen Seitenfläche 19 der Vorform 18 und einer Begrenzungsfläche 20 des Innenraums 14 besteht ein Abstand a, der hier vorteilhaft nicht größer als 50 mm und nicht kleiner als 15 mm ist, um Ablagerungen des Aufschmelzmaterials an der Begrenzungsfläche 20 zu vermeiden. Die Vorform 18 weist im Innenraum 14 eine Kappe 21 auf, deren im wesentlichen ebene Frontfläche, das Plateau 22, sich im Zentrum der Muffel 10 befindet und rechtwinklig zur Achse X-X gerichtet ist. Die parabolische Seitenfläche 19 der Vorform 18 ist die Flanke der Kappe 21. Der Brenner 16 ist durch die Öffnung 15, die in diesem Ausführungsbeispiel 60 mm Durchmesser hat, in den von der Rotationssymmetrie abweichenden Teil der Muffel 10 so eingeführt, daß seine Achse Y-Y geringfügig zur Rotationsachse X-X geneigt ist und unterhalb des Durchstoßpunktes der Rotationsachse X-X durch das Plateau 22 auf dieses trifft. Er weist mehrere im einzelnen nicht dargestellte, zueinander parallel gerichtete Düsen auf. Dabei entströmen der zentral angeordneten Düse 410 g/min · $cm^2$ $SiCl_4$ und den dazu peripher angeordneten Düsen 14,5 $m^3$/h $H_2$ sowie 7 $m^3$/h $O_2$, so daß sich eine Aufwachsgeschwindigkeit von 8 mm/h ergibt. Der Brenner 16 ist in der Öffnung 15 justierbar. Die Flamme 23 des Brenners 16 ist auf das Plateau 22 gerichtet.

Im Prozeß der Herstellung der Vorform 18 aus synthetischem Kieselglas, der grundsätzlich bspw. der DE 42 03 287 C2 entnehmbar ist, werden mittels $H_2/O_2$-Flamme aus $SiCl_4$ $SiO_2$-Partikel gebildet und sofort glasig bei Temperaturen von über 2000°C zur walzenförmigen, glasigen Vorform 18 aufgeschmolzen. Diese Vorform 18 hat ein rotationssymmetrisches Brechzahlprofil. Die am Ende des Schmelzprozesses der erfindungsgemäßen Anordnung entnommene erfindungsgemäße Vorform wird einem üblichen Kühlprozeß unterworfen, um innere Spannungen auf ≤ 5 nm/cm Spannungsdoppelbrechung abzubauen. Die Vorform 18 weist keinerlei Schichtungen auf. Mit der vorstehend beschriebenen Anordnung wird die walzenförmige Vorform 18 geschaffen, deren synthetisches Kieselglas die o. g. Parameter zum OH- und Cl-Gehalt sowie zur inneren Tansmission und zur außerordentlich geringen Transmissionsverringerung unter den angegebenen Bestrahlungsbedingungen sowie eine hohe optische Homogenität aufweist. Sie sind den folgenden Figuren entnehmbar.

Im kartesischen Koordinatensystem der Fig. 2 sind entlang der Abszisse die Laserpulszahlen 100 bis 1100, multipliziert mit $10^6$, und entlang der Ordinate die innere Transmission in % bei 10 mm Glasschichtdicke aufgetragen. Die Kurve 1 stellt die innere Transmission $T_i$ für Laserlicht der Wellenlänge 248 nm eines erfindungsgemäßen Kieselglases dar, die mit 99,84 % sehr hoch und bis zu $700 \cdot 10^6$ Laserpulsen konstant ist. Erst dort fällt sie leicht ab, und zwar um 0,02 % bis zu $1100 \cdot 10^6$ Laserpulsen. Die Transmissionsverringerung $\Delta T$ liegt also bei $900 \cdot 10^6$ Laserpulsen weit unter dem oben genannten Wert von 0,1 %. Die weiteren Bedingungen sind: Laserfrequenz = 300 Hz, Energiedichte = 10 mJ/$cm^2$.

Für das kartesische Koordinatensystem der Fig. 3 gelten die gleichen Maßbeziehungen wie zu Fig. 2. Das 10 mm dicke Kieselglas ist einer Laserstrahlung mit folgenden Bedingungen ausgesetzt: $\lambda_2$ = 193 nm, Laserfrequenz = 300 Hz, Energiedichte = 1,5 mJ/$cm^2$. Die Kurve 2 stellt die innere Transmission des erfindungsgemäßen Kieselglases dar, die bis zu $300 \cdot 10^6$ Laserimpulsen konstant ist, zwischen $300 \cdot 10^6$ und $500 \cdot 10^6$ Laserimpulsen um 0,05% sowie zwischen $500 \cdot 10^6$ und $700 \cdot 10^6$ Laserimpulsen um 0,04% abfällt und danach bis zu $1100 \cdot 10^6$ Laserimpulsen konstant bleibt. Auch in diesem Fall wird die Bedingung für die Transmissionsverringerung $\Delta T \leq 0,1\%/cm$ eingehalten.

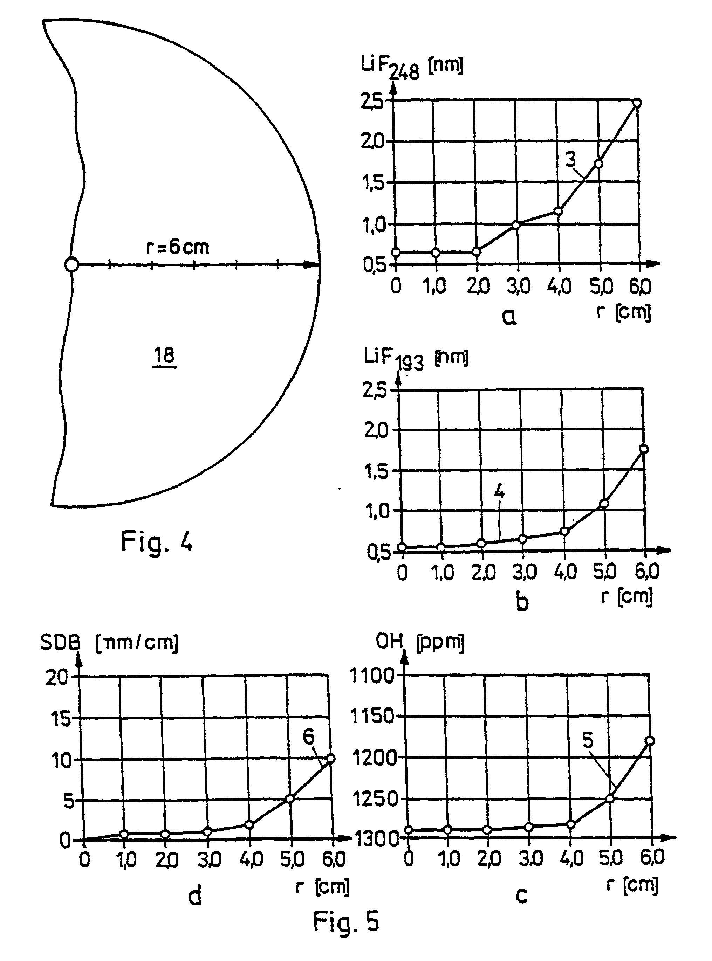

In Fig. 4 ist der Grundriß einer Vorform 18 mit einem Radius r = 6 cm teilweise dargestellt. Der Radiusvektor r bildet die Abszisse in der folgenden Fig. 5. Dabei gelten die zu den Figuren 2 und 3 genannten Anregungsbedingungen für die Laserstrahlung.

In Fig. 5a sind für die Wellenlänge $\lambda_1$ die LIF-Werte durch eine Kurve 3 in Abhängigkeit vom Radius von cm zu cm dargestellt. Zur Ermittlung LIF-Werte wurden die von W. Triebel u. a. in der Ztschr. Technisches Messen, Bd. 63 (1996) Heft 7/8, Seiten 291 - 295 veröffentlichen Erkenntnisse zur Ermittlung der die Langzeitstabilität optischer Bauelemente bei Laserbestrahlung beeinflussenden Parameter in Anwendung gebracht. Der Zustand einer unveränderten Lumineszenz wurde nach 2000 Laserschüssen erreicht, in dem eine unveränderte Lumineszenz bei einer Wellenlänge von 650 nm gemessen wurde. Die über den Radius ermittelten LIF-Werte von 0,7 bis 2,5 liegen bei etwa 1/10 der LIF-Werte der zum Stand der Technik bekannten einschlägigen Erzeugnisse. Entsprechendes gilt auch für die LIF-Werte der Wellenlänge $\lambda_2$, die in Fig. 5b als Kurve 6 von cm zu cm Radius dargestellt sind und von der Mitte bis zum Rande der Vorform 18 von 0,55 bis 1,8 reichen.

In Fig. 5c ist der über dem Radius ermittelte OH-Gehalt in einer Kurve 4 von cm zu cm abgetragen. Dabei zeigt sich, daß er in einem Kernbereich von 4 cm weit über dem Mindestwert von 1150 ppm liegt und daß dieser Mindestwert noch an der Peripherie der Vorform 18 mit 1180 ppm eingestellt wird.

In Fig 5d sind die über dem Radius gemessenen Werte der Spannungsdoppelbrechung (SDB) in einer Kurve 5 abgetragen. Es zeigt sich, daß zumindest im Kernbereich bis 4 cm die Werte weit unter dem Grenzwert von 5 nm/cm Schichtdicke für die Spannungsdoppelbrechung liegen und daß in der Randzone (r =5 bis 6 cm) der Vorform 18 dieser Grenzwert wenigstens nahezu eingehalten wird.

## Bezugszeichenliste

| | |
|---|---|
| 1, 2, 3, 4, 5, 6 | Kurven |
| 10 | Muffel |
| 11, 12, 13 | Schalen |
| 14 | Innenraum |
| 15 | kleinere Öffnung |
| 16 | Brenner |
| 17 | größere Öffnung |
| 18 | Vorform |
| 19 | parabolische Seitenfläche |
| 20 | Begrenzungsfläche |
| 21 | Kappe |
| 22 | Plateau |
| 23 | Flamme |
| X-X | Rotationsachse |
| Y-Y | Achse des Brenners |

## Patentansprüche

1. Vorform aus synthetischem Kieselglas, die nach dem Verfahren der Flammenhydrolyse mit nachfolgender Kühlung hergestellt worden und zur Anwendung mit energiereicher DUV-Strahlung im Wellenlängenbereich unter 250 nm geeignet ist, gekennzeichnet durch einen Kernbereich, dessen OH-Gehalt $\geq$ 1150 ppm, dessen Spannungsdoppelbrechung $\leq$ 5 nm/cm, dessen $H_2$-Gehalt $\geq 1 \cdot 10^{18}$ Moleküle/$cm^3$, dessen Cl-Gehalt $\leq$ 20 ppm beträgt, dessen Gehalt an Spurenverunreinigungen der Elemente Cr, Co, Fe, Ni, Cu, V, Zn, Al, Li, K, Na bis zu 500 ppb beträgt und der im wesentlichen frei von Schichtungen ist und dessen Widerstandsfähigkeit gegenüber energiereicher DUV-Strahlung durch eine Transmissionsverringerung von Delta T $\leq$ 0,1 %/cm Dicke gegeben ist, wenn das Kieselglas folgende Bestrahlung erfahren hat: Wellenlänge $\lambda_1$ = 248 nm, Laserschußfrequenz $\geq$ 300 Hz, Laserschußzahl $\geq 10^9$ und Energiedichte $\leq$ 10 mJ/$cm^2$ sowie Wellenlänge $\lambda_2$ = 193 nm, Laserschußfrequenz $\geq$ 300 Hz, Laserschußzahl $\geq 10^9$ und Energiedichte $\leq$ 5 mJ/$cm^2$.

2. Vorform gemäß Anspruch 1, dadurch gekennzeichnet, daß bei veränderter Bestrahlung zwar eine veränderte Transmissionsverringerung, jedoch ein unverändertes Damageverhalten auftritt.

3. Vorform gemäß Anspruch 2, dadurch gekennzeichnet, daß der Durchmesser des Kernbereichs. mindestens 50% des Vorformdurchmessers beträgt.

4. Vorform gemäß Anspruch 3, dadurch gekennzeichnet, daß sie völlig schichtenfrei ist.

**5.** Vorform gemäß Anspruch 1 oder 4, dadurch gekennzeichnet, daß der OH-Gehalt des Kernbereichs ≥ 1250 ppm ist.

**6.** Vorform gemäß Anspruch 1 oder 5, dadurch gekennzeichnet, daß der OH-Gehalt des Kernbereichs mit einer Toleranz ±10 ppm konstant ist.

**7.** Vorform gemäß mindestens einem der vorstehenden Ansprüche, dadurch gekennzeichnet, daß sie zumindest in einem Teil des Kembereichs eine Brechzahlhomogenität von ≤ 0,5 · 10⁻⁶ aufweist.

**8.** Vorrichtung zur Herstellung der Vorform gemäß mindestens einem der Ansprüche 1 bis 7, bei der eine Muffel mit einem Innenraum horizontal angeordnet ist, der an gegennüberliegenden Seiten der Muffel je eine unterschiedlich große Öffnung aufweist, von denen die größere Öffnung zur Entnahme der Vorform und die kleinere Öffnung zur Einführung eines Brenners dient, dadurch gekennzeichneet, daß der Muffelinnenraum sich von der größeren zur kleineren Öffnung im wesentlichen kontinuierlich verengt und zumindest der die Vorform umschließende Teil des Muffelinnenraums zur Drehachse der Vorform wenigstens annähernd rotationssymmetrisch gestaltet ist.

**9.** Vorrichtung gemäß Anspruch 8, dadurch gekennzeichnet, daß die Gesamtlänge der Muffel mindestens gleich dem Zweifachen des Durchmessers der glasigen Vorform ist.

**10.** Vorrichtung gemäß Anspruch 8, dadurch gekennzeichnet, daß die Frontfläche der Vorform sich im Zentrum des Innenraumes der Muffel befindet.

**11.** Vorrichtung gemäß Anspruch 8, dadurch gekennzeichnet, daß die Muffel dreischichtig ausgebildet ist.

**12.** Vorrichtung gemäß Anspruch 8, dadurch gekennzeichnet, daß der Abstand der Vorformoberfläche von der Innenraumbegrenzungsfläche 5 bis 100 mm beträgt.

**13.** Vorrichtung gemäß Anspruch 8, dadurch gekennzeichnet, daß der Abstand des Brenners von der Frontflache der Vorform 135 bis 350 mm beträgt.

**14.** Vorrichtung gemäß Anspruch 8, dadurch gekennzeichnet, daß die kleinere Öffnung, in deren Ebene der Brenner einstellbar angeordnet ist einen Durchmesser von 50 his 100 mm hat

**Claims**

**1.** Synthetic quartz glass preform which is produced according to the flame hydrolysis technique with subsequent cooling and which is adapted for application of high-energy DUV-radiation in the wavelength range under 250 nm, characterized in that a core area is provided with an OH-content of ≥ 1150 ppm, a strain birefringence of ≤ 5 nm/cm, a $H_2$-content of ≥ 1 · 10¹⁸ molecules/cm³, a Cl-content of ≤ 20 ppm, an amount of contaminating trace elements Cr, Co, Fe, Ni, Cu, V, Zn, Al, Li, K, Na up to 500 ppb and which is substantially free of stratifications, and the stability of which towards high-energy DUV-radiation is given by a transmissions reduction of AT ≤ 0.1 %/cm thickness, when the synthetic quartz glass is subjected to the following radiation: wavelength $\lambda_1$ = 248mn, laser shot frequency ≥ 300 Hz, laser shot rate ≥ 10⁹, and energy density ≤ 10 mJ/cm², as well as wavelength $\lambda_2$=193 nm, laser shot frequency ≥ 300 Hz, laser shot rate ≥ 10⁹, and energy densityn ≤ 5 mJ/cm².

**2.** Preform as claimed in claim 1, characterized in that at a radiation variation a varied transmission reduction takes place, but an unchanged damage behavior.

**3.** Preform as claimed in claim 2, characterized in that the diameter of the core area amounts to at least 50% of the preform diameter.

**4.** Preform as claimed in claim 3, characterized in that the same is entirely without any stratification.

**5.** Preform as claimed in claim 4, characterized in that the OH content of the core area is ≥ 1250 ppm.

**6.** Preform as claimed in claim 1 or 5, characterized in that the OH content of the core area is constant at a tolerance of ± 10 ppm.

**7.** Preform as claimed in at least one of the preceding claims, characterized in that at least a portion of the core area exhibits a refractive index homogeneity of ≤ 5 · 10⁻⁶.

**8.** A device for producing the preform as claimed in at least one of the claims 1 to 7, in which a horizontally arranged muffle, comprising an internal chamber, is provided on opposite sides with differently sized openings each, the larger of which is adapted for removing the preform and the smaller one for inserting a burner, characterized in that the internal chamber of the muffle substantially gradually narrows from the larger opening to the smaller opening and at least the portion of the muffle internal chamber which envelopes said preform is at least approximately rotation-symmetrical to the axis of rotation of said preform.

9. Device as claimed in claim 8, characterized in that the entire length of the muffle is at least equal to double the diameter of the vitreous preform.

10. Device as claimed in claim 8, characterized in that the leading face of the preform is in the center of the internal chamber of the muffle.

11. Device as claimed in claim 8, characterized in that the muffle is embodied in three shells.

12. Device as claimed in claim 8, characterized in that the distance of the preform surface to the limiting surface of the internal chamber amounts to 5 to 100 mm.

13. Device as claimed in claim 8, characterized in that the distance of the burner to the leading face of the preform is 135 to 350 mm.

14. Device as claimed in claim 8, characterized in that the smaller opening in the plane of which the burner is adjustably arranged has a diameter of 50 to 100 mm.

**Revendications**

1. La préforme réalisée en quartz fondu synthétique suivant le procédé de l'hydrolyse à flamme avec réfrigération suivante et appropriée à l'application en présence d'un rayonnement DUV de haute énergie aux longueurs d'ondes inférieures à 250 nm, est caractérisée en ce qu'il existe une zone centrale dont la teneur en OH $\geq$ 1150 ppm , dont la biréfringence est $\leq$ 5nm/cm, dont la teneur en $H^2 \geq 1 \cdot 10^{18}$ molécules/$cm^3$, dont la teneur en CL $\leq$ 20 ppm, dont la teneur d'impuretés des éléments Cr, Co, Fe, Ni, Cu, V, Zn, Al, Li, K, Na va jusqu'à 500 ppb et qui dans l'essentiel demeure exempte de stratifications et dont la résistance contre les rayonnements DUV de haute énergie est donnée grâce à une réduction de la transmission de $\Delta T \leq 0,1$ % /cm d'épaisseur dans le cas où le quartz fondu a été exposé aux rayonnements suivants : Longueur d'onde de $\lambda_1 = 248$ nm, fréquence d'attaques au laser $\geq$ 300 Hz, nombre d'attaques au laser $\geq$ 109 et densité du flux d'énergie $\leq$ 10 mJ/$cm^2$ ainsi que longueur d'onde $\lambda_2 = 193$ nm, la fréquence d'attaques au laser $\geq$ 300 Hz, le nombre d'attaques $\geq 10^9$ et la densité du flux d'énergie $\leq$ 5mJ/$cm^2$.

2. La préforme suivant la revendication 1 est caractérisé en ce que la modification du rayonnement entraîne une réduction modifiée de la transmission mais que le comportement endommageant demeure le même.

3. La préforme suivant la revendication 2 est caractérisée en ce que le diamètre de la zone centrale représente au moins 50 % du diamètre de la préforme.

4. La préforme suivant la revendication 3 est caractérisée en ce qu'elle est exempte à 100% de stratifications.

5. La préforme suivant la revendication 1 ou 4 est caractérisée en ce que la teneur en OH de la zone centrale reste $\geq$ 1250 ppm .

6. La préforme suivant la revendication 1 ou 5 est caractérisée en ce que la teneur en OH de la zone centrale avec une tolérance de $\pm 10$ ppm, est constante.

7. La préforme suivant au moins une des revendications précédentes est caractérisée en ce qu'elle présente au moins dans une partie de la zone centrale une homogénéité de l'indice de réfraction $\leq 0,5 \cdot 10^{-6}$.

8. Le système de fabrication d'une préforme suivant au moins une des revendications de 1 à 7, comprenant un moufle en position horizontale doté d'un espace intérieur présente sur les faces opposées du moufle un grand et un petit orifice , le grand orifice étant destiné à faire passer la préforme et le petit orifice à introduire le brûleur, est caractérisé en ce que l'espace intérieur du moufle se réduit en continu de l'orifice grand vers l'orifice petit mais l'espace où se trouve la préforme dans le moufle, a une forme presque symétrique par rapport à l'axe de révolution de la préforme.

9. Le système suivant la revendication 8 est caractérisé en ce que la longueur totale du moufle est au moins égale au double du diamètre de la préforme quartzeuse.

10. Le système suivant la revendication 8 est caractérisée en ce que la face frontale de la préforme se situe dans la zone centrale de l'espace intérieur du moufle.

11. Le système suivant la revendication 8 est caractérisée en ce que le moufle se compose de trois couches.

12. Le système suivant la revendication 8 est caractérisée en ce que la distance qui sépare la surface de la préforme de la surface intérieure du moufle est de 5 à 100 mm.

**13.** Le système suivant la revendication 8 est caractérisée en ce que la distance qui sépare le brûleur de la face frontale de la préforme est de 135 à 350 mm.

**14.** Le système suivant la revendication 8 est caractérisé en ce que le diamètre du petit orifice au niveau duquel le brûleur est disposé, va de 50 à 100 mm.

EP 0 964 832 B1

Fig. 1

Fig. 2

Fig. 3

10

Fig. 4

Fig. 5